# EUROPEAN PATENT APPLICATION

(11) **EP 1 517 223 A1**
(43) Date of publication of application: **23.03.2005**
(21) Application number: 03445104.7
(22) Date of filing: 18.09.2003
(51) Int. Cl.: G06F 3/00

(54) **A data input device for wearing by a user's hand, and a method of its operating**

(71) Applicant: ÄXXA Input Device AB, 411 23 Göteborg (SE)
(72) Inventor: Grimbrandt, Jan, 411 27 Göteborg (SE)

(57) **Abstract**

A data input device (1) is disclosed that comprises a structure (23, 29) designed for wearing by a user's hand (25), the structure (23, 29) is arranged with at least one data input means (3), and a position of the at least one data input means (3) corresponding to at least one contact area between the user's hands (25) when the user has folded, or clasped, the hands. Also disclosed is a method of operating a data input device (1) comprising a structure (23, 29) designed for wearing by a user's hand (25), wherein the structure (23, 29) arranged with at least one data input means (3), and a position of the at least one data input means (3) corresponding to at least one contact area between the user's hands (25) when the user has folded, or clasped, the hands. The method comprises generating a data input device operational status signal by determining if a reading of the at least one data input means (3) is in accordance with a predetermined data input device operational status signal reference; and indicating the data input device operational status signal.

## Description

### TECHNICAL FIELD OF INVENTION

According to a first aspect, the present invention relates to a data input device.

According to a second aspect, the present invention relates to the combination of two input devices.

According to a third aspect, the present invention relates to a method of operating a data input device.

### BACKGROUND OF INVENTION

When controlling equipment, and other artifacts, it is important that this can be done with ease and comfort. Otherwise, there is a risk of limited control quality. Also, there is a risk of ergonomic problems that may arise after some time of controlling. In addition, there are people not able to control equipment, and other artifacts, as easily as other people, for instance the physically impaired. For these people it may be difficult to control equipment, regardless of what type it is. There are also situations in which it is difficult to perform the controlling activity due to contextual conditions, such as harsh and hostile environments. Further, the interaction between a user and mobile services including gaming or messaging presents a limitation at a functional level. The design of mobile keypads limits the possible interaction between the user and services. The interactive requirements set by games is an important factor pushing the development in the direction of more efficient interfaces, including man-machine interfaces.

### SUMMARY OF INVENTION

According to a first aspect of the present invention a data input device is disclosed. The data input device comprises a structure designed for wearing by a user's hand, the structure arranged with at least one data input means, and a position of the at least one data input means corresponding to at least one contact area between the user's hands when the user has folded, or clasped, the hands. The term data input means includes terms as a button, a switch, and a joystick.

In a preferred embodiment of the data input device, the data input means is constituted by at least one of a number of features. The data input means may be constituted by a fabric provided with at least one of a resistive, piezoelectric, inductive, capacitive and mechanical indicating means, i.e. an indicating means that includes features related to the field of electronics. The data input means may also be constituted by an electrical conductor composite reversibly actuable by mechanical stress or electrostatic charge, i.e. an indicating means that is related to changes in its electrical properties. A third non-limiting example of a data input means is constituted by a polymer composition that comprises at least one substantially non-conductive polymer and at least one electrically conductive filler, i.e. an indicating means that is related to the polymer field. An alternative to the third non-limiting example is a polymer composition that comprises at least one substantially non-conductive polymer and at least one electrically conductive filler and that is in the form of granules. Fourth, another non-limiting example of a data input means is a joystick, or a joy stick, which is a means arranged for indicating a direction. The joystick may comprise data input means of the types described above. Today there is a multitude of joystick designs; such as those used in mobile applications, those presenting a protruding stick, and those presenting a recess.

In general, the data input means is located on the structure so that when a user has its hands clasped, the data input means are located so that the user's fingers of the user's one hand can operate the data input means arranged on the structure worn by the user's other hand.

Also important is the speed and ease of use with which the user interacts today, and is likely to interact in the future, when inputting data.

In a preferred embodiment of the data input device, the structure, which is designed for wearing by a user's hand and arranged with at least one data input means arranged at a position corresponding to at least one contact area between the user's hands when the user has folded the hands, may be disclosed using the following two non-limiting examples. First, the structure may be constituted by a band to be arranged in relation to the hand, allowing at least one finger of the user's other hand to operate the at least one data input means when the user has folded his hands. Second, the structure may be constituted by a glove, or a mitten, allowing at least one finger of the user's other hand to operate the at least one data input means. The term structure also includes a glove having its fingers cut off, either completely or partly.

In a preferred embodiment of the data input device, the at least one position includes an area of the structure corresponding to at least one bodily feature of a hand, or near at least one bodily feature of a hand, chosen to facilitate the operation with clasped hands. A first non-limiting example of a position is constituted by a contact area corresponding to a knuckle of the user's hand, when being worn by a user, or a contact area in the vicinity of the knuckles of the user's hand. It may also correspond to an area between two adjacent knuckles. Another non-limiting example of a position is constituted by an area of a finger, the area being defined as being between a knuckle and a top joint of a finger and between the finger and an adjacent finger. A third non-limiting example of a position is a fingertip, or more specifically an area defined as being opposite a fingernail. A fingertip is here defined as the distal section of a finger, starting from its last joint, or top joint, and extending to the distal end of the finger. The top joint of a finger is constituted by the joints being the closest to the nail of the finger. A fourth non-limiting example of a position is the palm, or a part of the palm, of the user's hand.

In a preferred embodiment of the data input device, it further comprises at least one of a processing means and communication capabilities, being in electrical communication with the at least one data input means. This supports the data input device when communicating the input data to a receiver.

In a preferred embodiment of the data input device, the communication capabilities include at least one of wired communication and wireless communication.

In a preferred embodiment of the data input device, the communication capabilities may be arranged between the processing means and the at least one data input means, i.e. the processing means may be located not in the absolute vicinity of the data input device. In a preferred embodiment, the processing means may be arranged between the communication capabilities and the at least one data input means.

In a preferred embodiment of the data input device, the structure is designed in a material that is flexible, allowing the structure to adopt a shape corresponding to a shape of a contact area of the user's hand.

In a preferred embodiment of the data input device, the structure is designed in a material that is non-flexible, allowing the structure to clamp around a contact area of the user's hand.

In one preferred embodiment of the data input device, the processing means is configured for generating a data input device operational status signal by determining if a reading of the at least one data input means is in accordance with a predetermined data input device operational status signal reference, and indicating the data input device operational status signal. The predetermined data input device operational status signal reference comprise a, or a combination of, data input means required to be activated, or pressed, in order for the device to indicate that the device is in operating condition, which corresponds to the user hands being in a clasped, or folded, position.

According to a second aspect of the present invention hereby disclosed, two input devices according to the present invention are a combined. This embodiment opens up for increased performance since it is possible to increase the functionalities of this aspect of the invention since opportunities now offer that the number of data input means is increased. An embodiment of a data input device according to this aspect may present similarities with the first aspect designed for wearing by a user's hand as presented earlier. However, there may be differences between the two data input devices in terms of:
- the structure designed for wearing by a user's other hand,
- the numbers of data input means, and
- the position(s) of the data input means.

In a preferred embodiment of the second aspect, the predetermined data input device operational status signal reference may be employed as one of a password and identifier of the user.

Now turning to the third aspect of the present invention, a method of operating a data input device comprising a structure designed for wearing by a user's hand is disclosed. The data input device presents the hardware characteristics as above. The structure is arranged with at least one data input means. Also provided is a position of the at least one data input means corresponding to at least one contact area between the user's hands when the user has folded the hands. The method comprises the steps of:
1) generating a data input device operational status signal by determining if a reading of the at least one data input means is in accordance with a predetermined data input device operational status signal reference; and
2) indicating the data input device operational status signal.

In a preferred embodiment, the predetermined data input device operational status signal reference comprise a, or a combination of, data input means required to be activated, or pressed, in order for the device to indicate that the device is in operating condition, which corresponds to the user hands being in a clasped, or folded, position. The method is performed under the control of a processing means.

In a preferred embodiment, the predetermined data input device operational status signal reference comprise a, or a combination of, data input means required to detect the correct position of the user's hand to indicate that the device is in operating condition which corresponds to the user hands being in a clasped, or folded, position. The method is performed under the control of a processing means.

In a preferred embodiment of the third aspect, the method further comprises the step of activating the device when the data input device operational status signal is in accordance with a predetermined data input device operational status signal reference. Thus, according to this embodiment, a requirement for receiving data is that the data input device operational status signal is in accordance with a predetermined data input device operational status signal reference, i.e. in case this condition is not fulfilled then the device will not be activated. When the device is not activated the device may be in a standby or shut down state.

In a preferred embodiment of the third aspect, the predetermined data input device operational status signal reference may be employed as one of a password and identifier of the user.

In a preferred embodiment of the third aspect, the method further comprises the step of receiving data from the at least one data input means, provided that the data input device operational status signal is in accordance with a predetermined data input device operational status signal reference. Thus, according to this embodiment, a requirement for receiving data is that the data input device operational status signal is in accordance with a predetermined data input device operational status signal reference, i.e. in case this condition is not fulfilled then data will not be received by the processing means.

In a preferred embodiment of the third aspect, the method further comprises the step of coding the data.

In a preferred embodiment of the third aspect, the method further comprises the step of communicating data to a receiver, using a communication capabilities, provided that the data input device operational status signal is in accordance with a predetermined data input device operational status signal reference.

Depending on the application of the data input device, the receiver is responsive for the further handling of the data.

Non-limiting examples, or applications, of the three aspects of the present invention are presented in the list below.
1. Information technology control, such as computer control, e.g. a general-purpose computer, cell phone/mobile phone, and personal digital assistants (PDAs), i.e. employing the two aspects to input data, such as alphanumeric/control characters, to a computer related system.
2. Game control, i.e. using the aspects of the present invention as a means of inputting game control data, data instead of, or as a complement to, using a joystick, a game pad or other means of control.
3. Equipment control, e.g. control related to manufacturing, transportation, and automation
4. Virtual reality control, e.g. controlling features, such as virtual persons, of a virtual reality computer apparatus
5. Consumer product control
6. Military applications, i.e. using the aspects to input data to e.g. military communication equipment, vehicles, and weapons
7. Equipment and application control in harsh and hostile environments, e.g. in vehicles at sea, in the air, and on land/off-road vehicles
8. Medical, rehab applications, e.g. a data input device for the physically impaired, a communication aid for the deaf, or mute

### DESCRIPTION OF THE DRAWINGS

With reference to a number of drawings, the invention will now be further described.

In Figure 1A. 1B, and 1C, two hands are disclosed in non-limiting examples of their clasped, or folded, position.

In Figure 2, a schematic representation of an embodiment of a fabric provided with at least one of a resistive, piezoelectric, inductive, capacitive and mechanical indicating means, which is connected by wires to an electronics unit, is disclosed.

In Figures 3A and 3B, an embodiment of a structure constituted by a band to be arranged in relation to a hand, allowing fingers of the user's other hand to operate the four data input means when in clasped position, is disclosed.

In Figure 4, an embodiment of a structure constituted by a band, designed only to cover primarily the back of the hand, to be arranged in relation to the hand, allowing fingers of the user's other hand to operate the data input means, is disclosed.

In Figure 5, an embodiment of a structure constituted by a glove, or a glove having its fingers, or a part of its fingers removed, and having a number of data input means, allowing at least one finger of the user's other hand to operate the data input means is disclosed.

In Figure 6, an embodiment of positions, for operation with clasped or folded hands, of data input means of the device and including an area of the structure corresponding to a knuckle of the user's hand, or near a knuckle, is disclosed.

In Figure 7, an embodiment of positions of data input means intended primarily for detecting correct positions related to activation of the device.

In Figures 8A and 8B, an embodiment of positions of data input means including an area of the structure corresponding to one, or more, fingertips or at least near one, or more fingertips, and the palm of the hand is disclosed.

In Figure 9, an embodiment of the second aspect is disclosed.

In Figure 10, a schematic representation of an embodiment of the data input device further comprising at least one of a processing means and communication capabilities is disclosed.

In Figure 11, an embodiment of a simple flowchart illustrating steps of a preferred embodiment of the method according to the second aspect of the present invention is disclosed.

In Figure 12, an embodiment of a set-up of data input means, a joystick and relations of alphanumeric characters to the set-up of data input means is disclosed.

### DESCRIPTION OF PREFERRED EMBODIMENTS

A preferred embodiment of a data input device will now be disclosed. It comprises a structure designed for wearing by a user's hand. The structure is arranged with at least one data input means 3, and a position of the at least one data input means 3 corresponding to at least one contact area between the user's hands when they are in clasped, or folded, position.

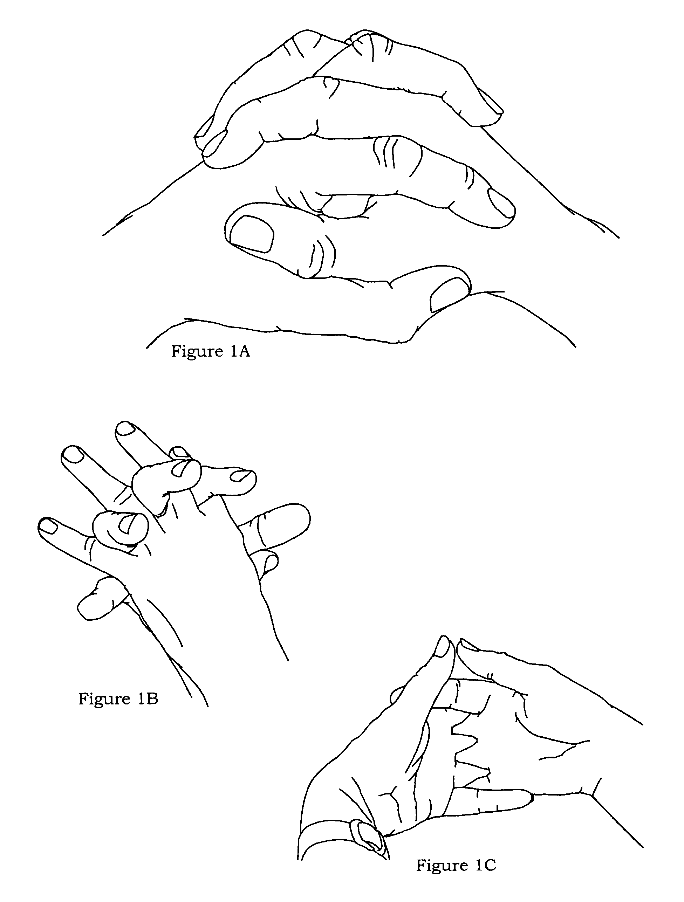

In Figures 1A, 1B, and 1C, two hands are presented in clasped, or folded, position. As can be seen in Figures 1A, 1B, and 1C, there is a number of ways in which hands may be considered clasped. In Figures 1A and 1B, the perhaps most common way of perceiving clasped hands are shown. In Figure 1C, a slightly different illustration of clasped hands are shown. The difference lies in that the thumbs do not contact each other in the way they do in Figures 1A and 1 B. The term 'clasped hands' often implies that fingers of one hand are interwoven with fingers of the other hand and, for instance the index fingers, are in contact with each other. However, in the context of the present invention, the term 'clasped hands' also includes finger arrangements in which corresponding fingers of each hand are not necessarily in contact with each other but with other fingers. A non-limiting example would be if the thumb and index finger of the right hand would both be over the thumb of the left hand, and partly obscuring it.

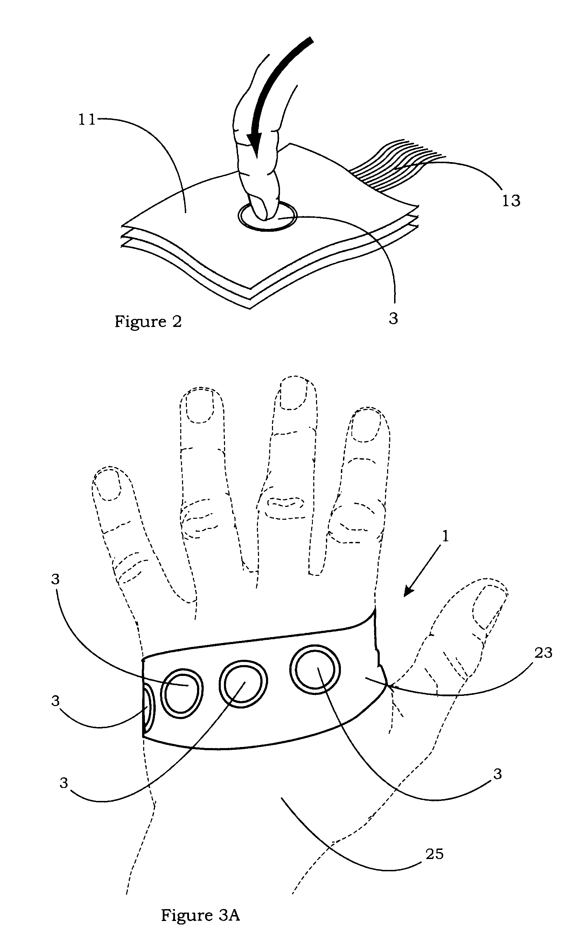

In a preferred embodiment of the data input device 1 presented in Figure 2, the data input means 3 is constituted by a fabric 11 provided with at least one of piezoelectric, resistive, inductive, capacitive and mechanical indicating means. In a preferred embodiment, the data input means 3 is constituted by an electrical conductor composite reversibly actuable by mechanical stress. In a preferred embodiment, the data input means 3 is constituted by a polymer composition comprising at least one substantially non-conductive polymer and at least one electrically conductive filler. In a preferred embodiment of the piezoelectric data input means is arranged to produce a wide range of voltages and present response in relation to various types of and magnitudes of physical stimulus non exclusively including torsion, tensile force, and pressure. It should be pointed out that any combination of the non-limiting examples of the data input means 3 is also within the scope of the present invention. Also presented in Figure 2 is an electrical communication means 13 responsive for communicating signals to a processing means, which is not shown.

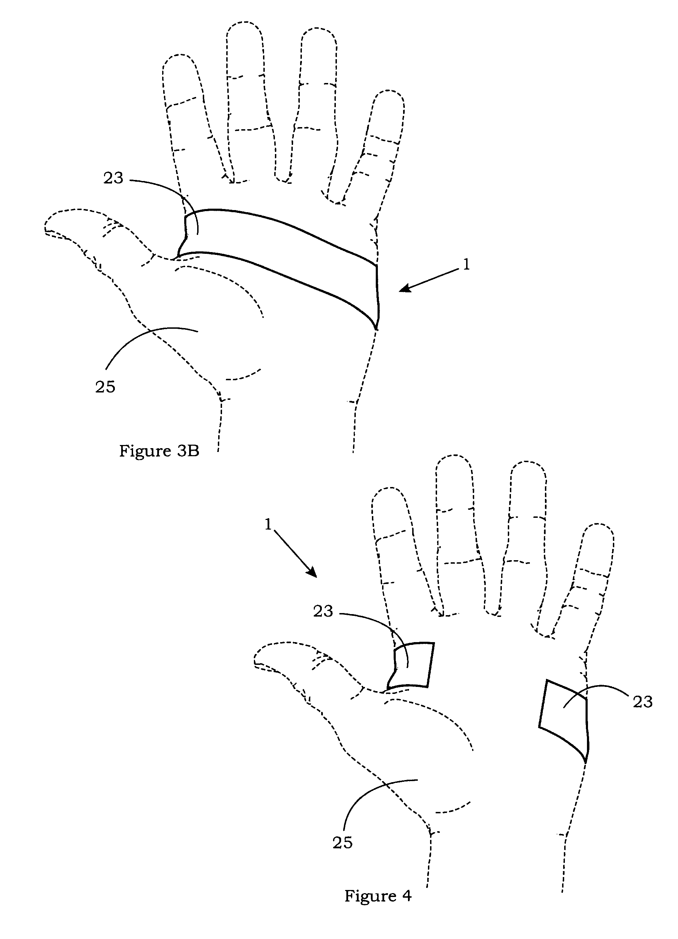

In a preferred embodiment of the data input device 1 presented in Figures 3A and 3B, the structure is constituted by a band 23 to be arranged in relation to the hand, allowing at least one finger of the user's other hand to operate the at least one data input means 3. In Figures 3A and 3B, the band 23 is depicted to cover partly also a part of the palm of the hand 25. Also depicted in Figure 3A is a number of data input means 3.

However, in Figure 4, a preferred embodiment of a band 23 is depicted, in which the band 23 is designed only to cover primarily the back of the hand 25, allowing at least one finger of the user's other hand to operate the at least one data input means 3. The band 23 may be applied by a user elastically opening the band 23 by bending it and inserting the hand 25 or strapping the band 23 to the hand 25.

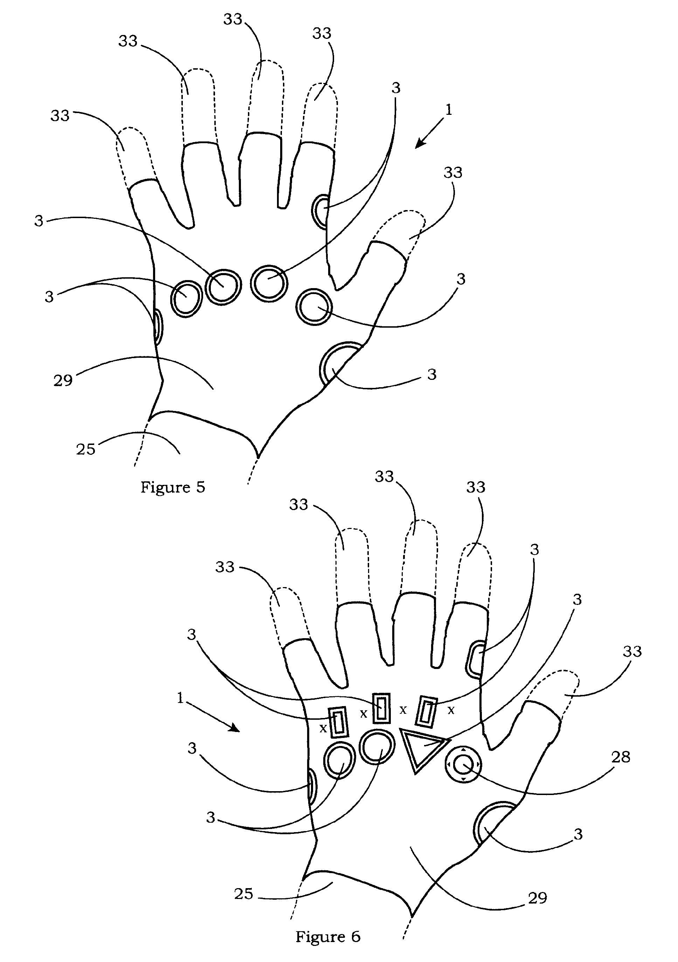

In Figure 5, a preferred embodiment of a structure constituted by a glove 29, or a glove having its fingers, or parts of its fingers, removed, is presented. In Figure 5, there is a number of data input means 3 for instance located on the back of the hand 25. It should be pointed out that there may be other locations for the data input means 3. The locations of the data input means 3 allow at least one finger of the user's other hand to operate the data input means 3, when the user has clasped the hands.

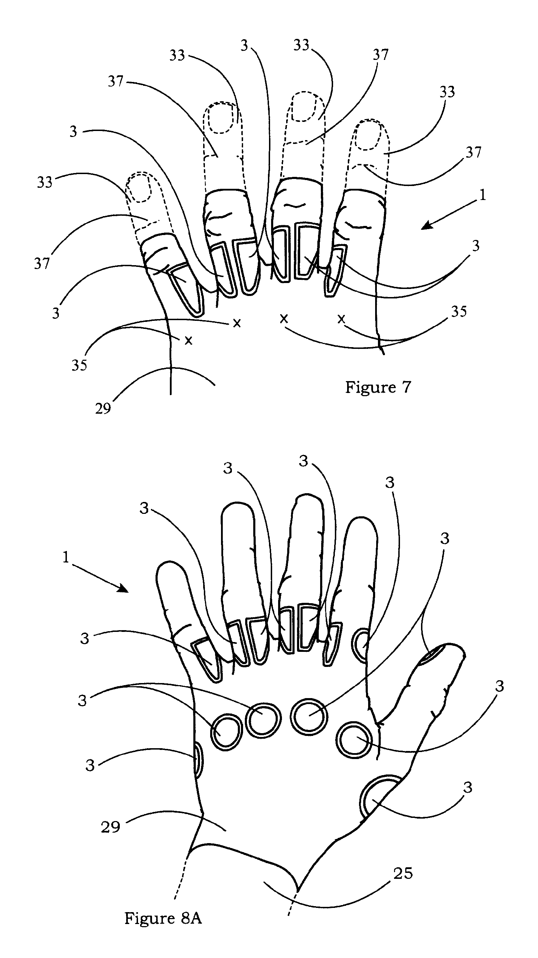

In the Figures 3A and 5, the data input means 3 are arranged to present round shapes. However, other shapes, and physical extents, of the data input means 3, such as oval and rectangular shapes, also lie within the scope of this invention. This is illustrated in Figure 6. In the preferred embodiments of the data input device 1 presented in Figures 5 and 6, the position of data input means 3 include an area of the structure corresponding to a knuckle of the user's hand, or near a knuckle in order to facilitate the operation with clasped hands. Locations corresponding to locations where knuckles would be are indicated by 'x' in Figures 6 and 7. The indicated structures in Figure 6 indicate possible locations of data input means 3. As can be seen in Figure 6, data input means 3 may be arranged toward the wrist of the hand in relation to the locations of the knuckles, or between them. It is also conceivable to arrange for instance two rows of data input means 33 and still operate the device with clasped or folded hands. In Figure 6, a joystick is schematically indicated 28.

In a preferred embodiment of the data input device 1 presented in Figure 7, the positions of data input means 3 include an area of the structure corresponding to an area of a finger 33, or near a finger 33, the area defined as being between a knuckle 35 and a top joint 37 of a finger 33 and between the finger 33 and an adjacent finger 33. In Figure 7, there are six data input means 3 disclosed. In a preferred embodiment, there is at least a single data input means 3 between each finger 33.

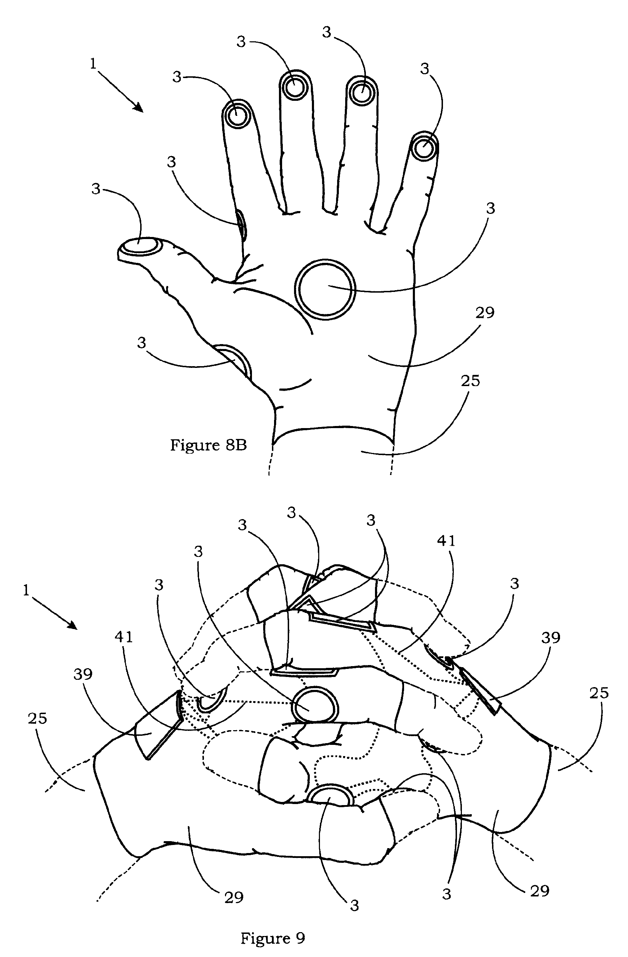

A preferred embodiment of the data input device 1 is presented in Figures 8A and 8B. In Figure 8B, the positions of data input means 3 include an area corresponding to the palm of the hand, or at least near the palm of the hand. This opens up for two ways of indicating clasped, or folded hands, one with the data input means 3 arranged in the palm of the hand and one without the data input means 3. However, the data input means 3 included in an area corresponding to the palm of the hand may not be limited for indicating whether the hands are in clasped, or folded, position. For instance, use of a touch pad may be preferred.

In a preferred embodiment of the data input device 1 presented in Figure 8B, the positions of data input means 3 include an area of the structure corresponding to one, or more finger tips, or at least near one, or more fingertips.

In a preferred embodiment of the data input device 1 presented in Figure 9, the data input device as described above comprises a data input device designed for wearing by a user's other hand. It is arranged with at least one data input means 3, and the position of the at least one data input means 3 corresponds to at least one contact area between the user's hands when the user has folded the hands. Also in Figure 9 there is a processing means and communication capabilities 39 included. For convenience these are presented ensemble in Figure 9. In a preferred embodiment the device 1 only comprise a single processing means and a single communication capabilities and the second data input device is arranged to communicate with the device 1 using one of wired and wireless technologies. Electrical wires 41 are employed for providing the signal communication from the data input devices 3 to a processing means.

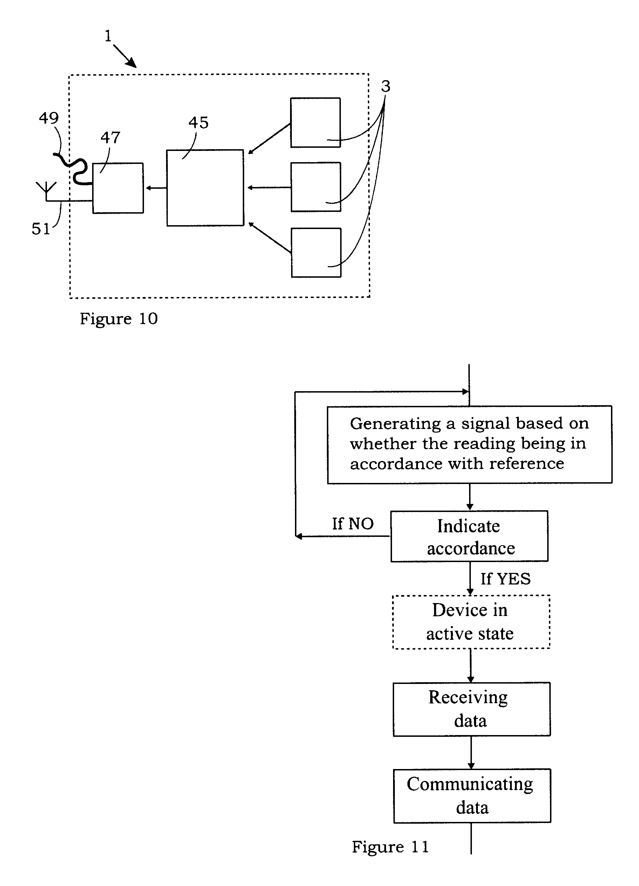

In a preferred embodiment of the data input device 1 presented in Figure 10, it further comprises at least one of a processing means 45, and communication capabilities 47, being in electrical communication with the at least one data input means 3. In a preferred embodiment, the communication capabilities 47 include at least one of wired communication 49 and wireless communication 51.

In preferred embodiments, the data input means 3 is arranged to pick up input data of at least one of the following types: binary (e.g. ON/OFF, or `0' or ' 1'), numerical value (e.g. 7), alphanumeric characters (e.g. 'A') and control characters (e.g. 'escape').

In a preferred embodiment, the processing means 39 is configured for generating a data input device operational status signal by determining if a reading of the at least one data input means 3 is in accordance with a predetermined data input device operational status signal reference. The indication that the hands are in clasped position may be based on certain positions of the data input means at a single point in time. However, it also lies within the scope of the present invention that the indication of clasped hands is generated after the user has inputted a predetermined sequence using the data input means, e.g. a user inputting: 'WAKE UP', or 'START'. The predetermined sequence may be constituted by a word not having a meaning, such as a password. Thus, the indication may be based on a certain input sequence being inputted during a time period. The processing means 39 is further configured for indicating the data input device operational status signal.

In a preferred embodiment, the data input means 3 present difference functions. For instance, data input means 3 located as in the embodiment presented in Figure 7 may be used to solely indicate whether the hands are clasped or not, i.e. they are related to the predetermined data input device operational status signal reference. That is, they are employed only as indicators whether the hands are clasped or not. Thus, it lies within the scope of the present invention that there may be data input means 3 solely intended for indicating whether the hands are clasped, or not, and there may be other data input means 3 responsive for inputting data.

A preferred embodiment of the method of operating a data input device 1 is now disclosed. The data input device 1 according to this embodiment presents the same hardware characteristics as above. Therefore, for reasons of brevity, reference to the disclosure above is made. The method comprises the step of generating a data input device operational status signal by determining if a reading of the at least one data input means is in accordance with a predetermined data input device operational status signal reference. The method also comprises the step of indicating the data input device operational status signal.

In a preferred embodiment, the method further comprises the step of receiving data from the at least one data input means, provided that the data input device operational status signal is in accordance with a predetermined data input device operational status signal reference.

In a preferred embodiment, the method further comprises the step of communicating data to a receiver, using a communication capabilities, provided that the data input device operational status signal is in accordance with a predetermined data input device operational status signal reference.

In a preferred embodiment, the method further comprises the step of coding the data.

In a preferred embodiment, there are one or more data input means that are intended to only indicate an 'ON' state of the data input device, leaving other data input means to inputting of data.

In Figure 11, a preferred embodiment of a simple flowchart indicating the steps is given.

In general there is a number of design dimensions within the disclosed inventive concept. Some of these are if there is a single data input device or a pair, the location of data input means on the data input device(s), the number of data input means, predetermined data input device operational status signal reference, and what each data input means may control (e.g. a motor).

In case there are two data input devices, they do not have to be identical in the sense that they present the same number, and location, of the data input means. Nor do they have to present the same type of structure in terms of material. Also, different types of data input means may be used at a data input device, regardless if it is of the single type or the pair type.

It is pointed out that the examples of arrangements of device(s), and data input means below are non-limiting examples of designs based on the inventive concept disclosed herein.
- Pair type device and data input means of the alphanumeric/control character type located between the knuckles
- Pair type device and data input means of the alphanumeric/control character type on one device and ON/OFF type means on the other device and located between the knuckles
- Single type device and data input means of the ON/OFF type and located between the knuckles
- Pair type device and data input means of the alphanumeric/control character type and located between the knuckles
- Single type device and input means of the ON/OFF type and located between the knuckles
- Single type device and input means of the ON/OFF type and located between the knuckles and a data input means located on the inside of the palm
- Single type device and input means of the ON/OFF type of which one or more are located between the knuckles and other are located on a finger tip

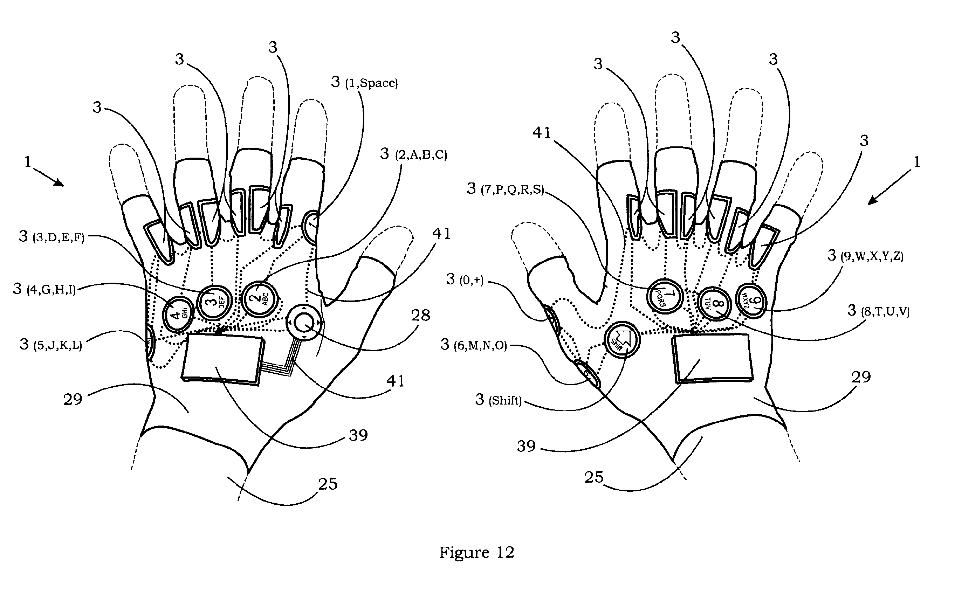

In Figure 12, an embodiment of two data input devices 1 is shown. For reasons of brevity, the reference numerals will not be explained again and therefore reference is made to embodiments described above. However, in Figure 12 an embodiment related to text input technology including the data input device 1 is disclosed. It comprises a set-up of data input means 3, a joystick 28 and relations of numbers and letters to the set-upof data input means 3 is disclosed. The data input means 3 may be used for, but are not limited to, the detection of correct position for operational status. In Figure 12, there are data input means 3 that are arranged to cover a plurality of numbers/letters/signs. For instance, a single data input means 3 is arranged to cover the numbers/letters of '3', 'D', 'E', and 'F'. This multiple data input means functionality may be reached by e.g. having a data input means in the indicating state a time longer than a predetermined time, or a data input means 3, or a combination of the two above, may be employed as 'shift'. Thus the 'shift' facility offers numerous shift-levels including a continuous pressure, a click, the double click, a click and continuous pressure. The 'shift' functionality may be used for inserting special characters and to reach a functionality including text input technology software, or predictive text input technology software, and switching between upper and lower case. Alternatively, a pressure larger than that of a predetermined level in relation to the data input means 3 in order to achieve an opportunity of obtaining multiple function of the data input means 3.

In a preferred embodiment, the processing means is arranged to suggest words from a built in glossary after the user having inputted a start of a word. In a preferred embodiment, the processing means 39 is configured for suggesting a number of words, on a display located either on the data input device 1, or a screen, allowing the user to indicate when the right word is suggested.

In a preferred embodiment, the processing means is further arranged for initiating spell check of words inputted by a user.

In one embodiment, the data input device is designed to incorporate one of a dead man's switch, a dead man's bar, and a dead man's system.

## Claims

1. A data input device (1) comprising:
a structure (23, 29) designed for wearing by a user's hand (25),
the structure (23, 29) arranged with at least one data input means (3), and
at least one position of the at least one data input means (3) corresponding to at least one contact area between the user's hands when the user has folded the hands.

2. A data input device (1) according to claim 1, wherein the data input means (3) is constituted by at least one of:
- a fabric (11), provided with at least one of a piezoelectric, resistive, inductive, capacitive and a mechanical indicating means;
- an electrical conductor composite reversibly actuable by mechanical stress or electrostatic charge;
- a polymer composition comprising at least one substantially non conductive polymer and at least one electrically conductive filler; and
- a joystick.

3. A data input device (1) according to claim 1, wherein the structure is one of:
- a band (23) to be arranged in relation to the hand (25), allowing at least one finger of the user's other hand to operate the at least one data input means (3),
- a glove (29), allowing at least one finger of the user's other hand to operate the at least one data input means (3).

4. A data input device (1) according to claim 1, wherein the at least one position includes an area, or near an area, corresponding to at least one of:
- a knuckle (35) of the user's hand (25),
- an area of a finger (33), the area defined as being between a knuckle (35) and a top joint of a finger (33) and between the finger (33) and an adjacent finger (33);
- a finger tip; and
- the palm of the hand.

5. A data input device (1) according to claim 1, further comprising at least one of:
a processing means (39); and
communication capabilities (39, 47); and
being in electrical communication with the at least one data input means (3).

6. A data input device (1) according to claim 5, wherein the communication capabilities (39, 47) include at least one of wired communication (49) and wireless communication (51).

7. A data input device (1) according to claim 5, wherein the processing means (39) is configured for
- generating a data input device operational status signal by determining if a reading of the at least one data input means (3) is in accordance with a predetermined data input device operational status signal reference; and
- indicating the data input device operational status signal.

8. A data input device comprising two data input devices (1) according to any one of claims 1 to 7.

9. A method of operating a data input device (1) comprising a structure (23, 29) designed for wearing by a user's hand (25),
the structure (23, 29) arranged with at least one data input means (3),
a position of the at least one data input means (3) corresponding to at least one contact area between the user's hands (25) when the user has folded the hands, the method comprising:
- generating a data input device operational status signal by determining if a reading of the at least one data input means (3) is in accordance with a predetermined data input device operational status signal reference; and
- indicating the data input device operational status signal.

10. A method according to claim 9, further comprising:
- receiving data from the at least one data input means (3), provided that the data input device operational status signal is in accordance with a predetermined data input device operational status signal reference.

11. A method according to claim 9, further comprising:
- communicating data to a receiver, using a communication capabilities (47), provided that the data input device operational status signal is in accordance with a predetermined data input device operational status signal reference.
